(19) Europäisches Patentamt / European Patent Office / Office européen des brevets

(11) **EP 3 779 218 B1**

(12) **EUROPEAN PATENT SPECIFICATION**

(45) Date of publication and mention
of the grant of the patent:
**15.02.2023 Bulletin 2023/07**

(21) Application number: **18912565.1**

(22) Date of filing: **27.12.2018**

(51) International Patent Classification (IPC):
**F16C 33/12** *(1968.09)*   **F16C 33/10** *(1968.09)*
**F16C 33/14** *(1968.09)*   **F16C 33/24** *(1968.09)*
**C22C 13/02** *(1974.07)*

(52) Cooperative Patent Classification (CPC):
**F16C 33/125; F16C 33/14;** C22C 13/02;
F16C 17/00; F16C 2204/34; F16C 2223/44;
F16C 2240/08; F16C 2240/18; F16C 2240/26;
F16C 2240/48; F16C 2240/60; F16C 2240/70;
F16C 2300/02; F16C 2300/14

(86) International application number:
**PCT/JP2018/048166**

(87) International publication number:
**WO 2019/187448 (03.10.2019 Gazette 2019/40)**

(54) **SLIDING MEMBER AND PRODUCTION METHOD THEREFOR**

GLEITLAGERELEMENT UND HERSTELLUNGSVERFAHREN DAFÜR

ÉLÉMENT GLISSANT ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.03.2018 JP 2018062026**

(43) Date of publication of application:
**17.02.2021 Bulletin 2021/07**

(73) Proprietor: **Daido Metal Company Ltd.
Nagoya-shi, Aichi 460-0008 (JP)**

(72) Inventor: **HARA, Takeyoshi
Inuyama-shi, Aichi 484-0061 (JP)**

(74) Representative: **AWA Sweden AB
Junkersgatan 1
582 35 Linköping (SE)**

(56) References cited:
**BE-A- 454 702       GB-A- 749 529
JP-A- H05 239 695     JP-A- H05 239 696
JP-A- H05 239 696     JP-A- H07 279 949
JP-A- 2006 266 445    JP-A- 2017 014 571
US-A- 2 283 219**

## Description

Technical Field

The present invention relates to a sliding member and a production method therefor.

Background Art

A sliding member for use in a bearing device comprises a bearing alloy layer on a side of a surface that slides against an opposite member. The bearing alloy layer is layered upon a back metal layer made of, for example, steel, for use as a sliding member. For this bearing alloy layer, for example, use of a material that does not include Cd, Pb or the like is required to achieve reduction of loads onto an environment. Heretofore, also in a bearing alloy layer containing Sn or Cu as a main component, a material has been suggested that does not include any substances as the loads onto the environment and meets requirements for a high strength (see cited Literatures 1 and 2).

In the case of cited Literature 1, Co, Mn, Sc, Ge or the like is added to Sn-Sb-Cu as a component of a bearing alloy layer, thereby forming an intermetallic compound to be precipitated in the bearing alloy layer, into finer states. Consequently, a sliding member of cited Literature 1 achieves an increased strength. Furthermore, in the case of cited Literature 2, Zn is added to a main component of Sn, to increase a strength of a mother phase, and to form a fine intermetallic compound into finer states. Consequently, a sliding member of cited Literature 2 achieves an increased strength. JP H05 239 696 A discloses a bearing alloy layer according to the preamble of claim 1.

However, in either of the conventional technologies, the strength of the bearing alloy layer of the sliding member increases, but wear resistance cannot be sufficiently achieved. That is, in the case of cited Literature 1, the intermetallic compound included in the bearing alloy layer is formed into finer states and is therefore easy to fall off from the bearing alloy layer due to wear on a sliding surface. This causes problems that wear in the bearing alloy layer easily proceeds and that the wear resistance deteriorates. Similarly, in the case of cited Literature 2, even if the strength of the mother phase of the bearing alloy layer is increased, the intermetallic compound formed into finer states is easy to fall off from the bearing alloy layer, and the wear resistance deteriorates. On the other hand, if diameters of particles of the intermetallic compound are increased to improve the wear resistance of the bearing alloy layer, cracks are easily generated from an interface between the mother phase and the intermetallic compound. There is concern that, if the generated cracks extend to an interface with the back metal layer, the interface between the bearing alloy layer and the back metal layer peels.

Citation List

Patent Literatures

Patent Literature 1: National Publication of International Patent Application No. 2011-513592
Patent Literature 2: National Publication of International Patent Application No. 2016-520715

Summary of Invention

Technical Problem

To solve problems, an object of the present invention is to provide a sliding member having improved wear resistance and having a high bond strength between a bearing alloy layer and a back metal layer.

Solution to Problem

A sliding member of the present embodiment to achieve the above object comprises a back metal layer, a bearing alloy layer, and an intermetallic compound. The bearing alloy layer is layered upon the back metal layer, and forms a sliding surface on a side opposite to the back metal layer. The intermetallic compound is included in a structure of the bearing alloy layer and is harder than an average hardness in the whole bearing alloy layer, and in the bearing alloy layer, an average diameter of particles of the intermetallic compound on a side close to the sliding surface is larger than an average diameter on a side close to the back metal layer.

In this way, in the intermetallic compound, the average diameter of the particles increases on the side close to the sliding surface, and the average diameter of the particles decreases on the side close to the back metal layer far from the sliding surface.

The intermetallic compound has a hardness higher than a hardness of a mother phase of the bearing alloy layer. Consequently, in the bearing alloy layer, proceeding of wear is inhibited because the intermetallic compound having a large average diameter of particles is present on the side close to the sliding surface. As a result, in the bearing alloy layer, wear resistance improves. It is desirable that an average diameter of particles on a sliding surface side is larger than 70 $\mu$m. On the other hand, an average diameter of particles of the intermetallic compound on a back metal layer side is smaller than that on the side close to the sliding surface. Consequently, in the bearing alloy layer, cracks are not easily generated from an interface between the mother phase and the intermetallic compound, and a bonding force between the bearing alloy layer and the back metal layer is sufficiently acquired. It is desirable that the average diameter of the particles on the back metal layer side is 70 $\mu$m or less. Furthermore, when the average diameter of the particles of the intermetallic compound decreases, strength of the bearing alloy layer itself increases as a whole. Therefore, not only the strength of the bearing alloy layer can increase, but also the wear resistance can improve. Furthermore, the generation of the cracks in the bearing alloy layer can reduce, and bond strength to the back metal layer can also increase. In the case of the present embodiment, it is desirable that the bearing alloy layer includes a region where the average diameter of the particles of the intermetallic compound proportionally decreases from the sliding surface side toward the back metal layer side. In the bearing alloy layer, the average diameter of the particles of the intermetallic compound proportionally changes, so that generation of stress with change in temperature can be reduced, and ensuring of toughness can be facilitated.

In the sliding member of the present embodiment, it is preferable that in the intermetallic compound, the average diameter of the particles on a side of the sliding surface is 80 $\mu$m or more.

Thus, the average diameter of the particles of the intermetallic compound on the sliding surface side is set to 80 $\mu$m or more, so that it becomes easy for the intermetallic compound to inhibit the proceeding of the wear. Therefore, the wear resistance can securely improve.

Furthermore, in the sliding member of the present embodiment, it is preferable that a value of a ratio (B/A) of an average diameter (B) of the particles of the intermetallic compound on the sliding surface side to an average diameter (A) on a side of the back metal layer is B/A $\geq$ 1.3. Additionally, in the sliding member of the present embodiment, it is further preferable that the above value of the ratio (B/A) is B/A $\geq$ 1.5.

Thus, the value of the ratio in the average diameter of the particles is set, so that the improvement of the wear resistance is compatible with the increase of the bond strength. That is, a sufficient difference is made in the average diameter of the particles of the intermetallic compound between the side close to the back metal layer and the side close to the sliding surface, so that in the sliding member of the present embodiment, the improvement of the wear resistance by the large particles of the intermetallic compound is compatible with the increase of the bond strength by the small particles of the intermetallic compound. Therefore, the wear resistance can further improve, and the bond strength to the back metal layer can also increase.

In the sliding member of the present embodiment, the bearing alloy layer is made of an Sn-based alloy containing Sn as a main component. Furthermore, in the sliding member of the present embodiment, the intermetallic compound is an Sn-Sb alloy. In the sliding member of the present embodiment, the back metal layer is made of steel.

In this way, even in the case where the bearing alloy layer and the back metal layer are formed of different materials, the average diameter of the particles of the intermetallic compound is decreased on the side close to the back metal layer. Consequently, the generation of the cracks in the bearing alloy layer can reduce, and the bond strength to the back metal layer can also increase.

A production method for the sliding member of the present embodiment comprises cooling one surface side of the back metal layer having an annular shape, while forming the bearing alloy layer by centrifugal casting, on the other surface side of the back metal layer, and controlling particle diameters of the intermetallic compound included in the bearing alloy layer.

The bearing alloy layer is uniformly layered upon an inner circumferential side of the back metal layer by use of so-called centrifugal casting. When an alloy that forms this bearing alloy layer is cast on the back metal layer, the one surface side of the back metal layer that is opposite to the bearing alloy layer is cooled. At this time, the cooling of the one surface side of the back metal layer is controlled, so that the diameters of the particles of the intermetallic compound to be crystallized change. Consequently, in the bearing alloy layer, the average diameters of the particles of the intermetallic compound on the side close to the back metal layer and the side close to the sliding surface are accurately controlled. Therefore, the particle diameters of the intermetallic compound in the bearing alloy layer can be securely varied.

Brief Description of Drawings

[Figure 1] Figure 1 is a schematic view showing a sliding member according to an embodiment, and showing an enlarged view of the part I of Figure 2.
[Figure 2] Figure 2 is a schematic perspective view showing the sliding member according to the embodiment.
[Figure 3] Figure 3 is a schematic view showing evaluation of the sliding member according to the embodiment.

Description of Embodiment

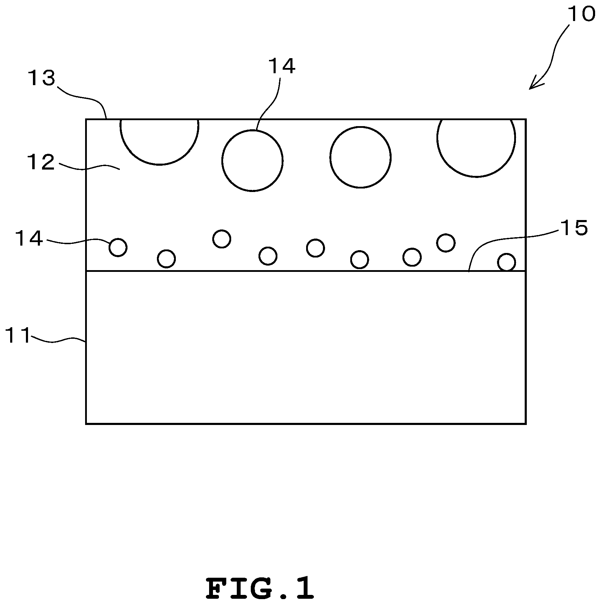

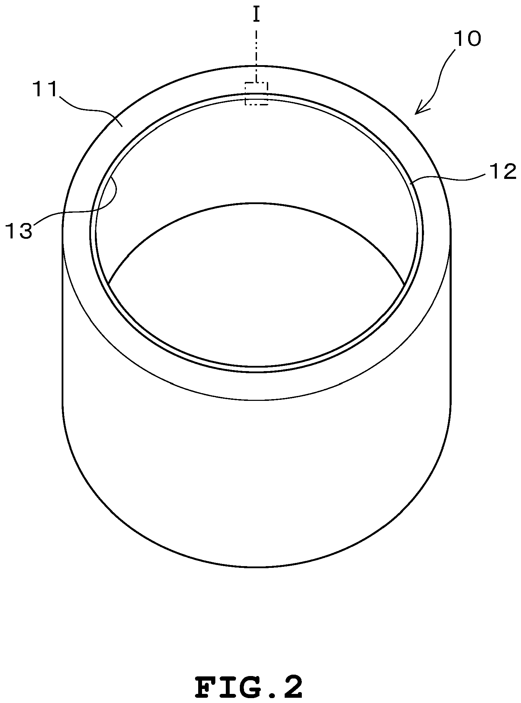

Hereinafter, an embodiment of a sliding member will be described with reference to the drawings.
As shown in Figure 1 and Figure 2, a sliding member 10 comprises a back metal layer 11 and a bearing alloy layer 12. The back metal layer 11 is, for example, formed of Fe, steel such as low carbon steel, copper alloy or the like. The bearing alloy layer 12 is layered upon the back metal layer 11 on one end face side. For example, in the case where the back metal layer 11 is annularly formed as shown in Figure 2, the bearing alloy layer 12 is provided on an inner circumferential side of the back metal layer 11. The bearing alloy layer 12 forms a sliding surface 13 on an end face opposite to the back metal layer 11. The sliding surface 13 slides against an unshown opposite member.

The bearing alloy layer 12 is made of an Sn alloy containing Sn as a main component. The bearing alloy layer 12 includes an intermetallic compound 14 in a structure as shown in Figure 1. A main component of the intermetallic compound 14 is Sn that is the main component of the bearing alloy layer 12. The intermetallic compound 14 is harder than an average hardness of the bearing alloy layer 12. In the case of the present embodiment, the bearing alloy layer 12 contains Sn as the main component, and at least Sb is added. In this case, the bearing alloy layer 12 includes an Sn-Sb compound as the intermetallic compound 14. Furthermore, Cu or Ag may be added to the bearing alloy layer 12. In this case, the bearing alloy layer 12 may include an Sn-Cu or Sn-Ag compound as the intermetallic compound 14. The bearing alloy layer 12 may include an Sn-X compound including an additional element X, for example, an Sn-Sb-Cu, Sn-Sb-Ag, or Sn-Sb-Cu-Ag compound. Furthermore, the bearing alloy layer 12 is not limited to an element that forms the intermetallic compound 14, and may include Bi, Cd, In or the like that forms a solid solution in the structure.

According to the present embodiment, an average diameter of particles of the intermetallic compound 14 included in the bearing alloy layer 12 on a side close to the sliding surface 13 is set to be larger than an average diameter of particles on a side close to the back metal layer 11. Here, the average diameter of the particles is an average value of particle diameters of three extracted particles, the three particles being extracted from the particle having the largest particle diameter in an arbitrary field of view in which the bearing alloy layer 12 is observed. It is considered that the average diameter of the particles on the side close to the back metal layer 11 is an average diameter (A). On the other hand, the average diameter of the particles on the side close to the sliding surface 13 is an average diameter (B).

In the case of the present embodiment, on a side of the bearing alloy layer 12 close to the back metal layer 11, an interface 15 between the back metal layer 11 and the bearing alloy layer 12 is set to 0 μm. At this time, the bearing alloy layer 12 is observed from a position of 10 μm to a position of 510 μm from the interface 15 in a thickness direction toward a sliding surface 13 side, in a region surrounded with four sides of 500 μm each in a direction vertical to the thickness direction, to perform image analysis. Furthermore, in the arbitrary observation field of view, three particles are extracted from the particle having the largest particle diameter among the particles of the intermetallic compound 14 included in the observation field of view. The average diameter (A) of the particles is calculated by averaging diameters of these three extracted particles.

Furthermore, on a side of the bearing alloy layer 12 close to the sliding surface 13, when the sliding surface 13 is set to 0 μm, the bearing alloy layer 12 is observed from a position of the sliding surface 13 to a position of 500 μm in the thickness direction toward the interface 15, in a region surrounded with four sides of 500 μm each in a direction vertical to the thickness direction, to perform image analysis. Then, in an arbitrary observation field of view, three particles are extracted from the particle having the largest particle diameter among the particles of the intermetallic compound 14 included in the observation field of view. The average diameter (B) of the particles is calculated by averaging diameters of the three extracted particles.

For a measuring method of the particle diameters, the particle diameters may be measured by an arbitrary method such as a method of using a diameter of a circumscribed circle, or a method of using a length of a maximum straight line among straight lines each passing a center of gravity of a target particle and connecting two points of an outer contour of the particle. The particles of the intermetallic compound 14 included in the bearing alloy layer 12 do not necessarily have a typical shape such as a spherical shape or a rectangular parallelepiped shape, and may possess a distorted shape including a protruding needle-like portion. Consequently, the arbitrary method may be employed depending on the image analysis. According to the present embodiment, in the latter method, the length of the maximum straight line among the straight lines each passing the center of gravity of the target particle and connecting two points of the outer contour of the particle is employed as the particle diameter.

According to the sliding member 10 of the present embodiment, the average diameter (B) of the particles of the intermetallic compound 14 on the sliding surface 13 side is 80 μm or more. The intermetallic compound 14 has a higher hardness than an Sn mother phase of the bearing alloy layer 12 has. In this way, in the bearing alloy layer 12, the comparatively large particles of the intermetallic compound 14 in which the average diameter of the particles is the average diameter (B) are present on the side close to the sliding surface 13. Consequently, in the bearing alloy layer 12, the average diameter (B) of the particles is large, and proceeding of wear is inhibited by the intermetallic compound 14 having the high hardness. That is, in the bearing alloy layer 12, the intermetallic compound 14 having a higher hardness than the Sn mother phase and including comparatively large particles is present, so that the proceeding of the wear in the bearing alloy layer 12 is inhibited by the intermetallic compound 14 having the high hardness. As a result, in the bearing alloy layer 12, wear resistance improves.

On the other hand, if all the particles of the intermetallic compound 14 included in the bearing alloy layer 12 are set to the average diameter (B), a problem occurs as follows. That is, the back metal layer 11 and the bearing alloy layer 12 are different in linear expansion coefficient. Therefore, when change in temperature occurs in the sliding member 10, stress is generated on the side of the bearing alloy layer 12 close to the back metal layer 11 due to difference in expansion amount, in the interface 15 between the back metal layer 11 and the bearing alloy layer 12. As a result, if the particles of the intermetallic compound 14 are large, stress generated in an interface between the mother phase and the intermetallic compound 14 as a secondary phase is concentrated and tends to increase, and there is concern that cracks are generated. To solve the problem, in the present embodiment, the average diameter (A) of the particles of the intermetallic compound 14 on a back metal layer 11 side is set to be smaller than the average diameter (B) of the particles on the side close to the sliding surface 13 side. The average diameter (A) is set to be smaller than the average diameter (B), so that the stress generated in the interface between the mother phase and the intermetallic compound 14 can decrease. That is, in the bearing alloy layer 12, since the average diameter (A) of the intermetallic compound 14 included in this layer is small, the generation of the cracks is inhibited. As a result, on the side of the bearing alloy layer 12 close to the back metal layer 11, the cracks do not easily extend to the interface between the bearing alloy layer 12 and the back metal layer 11, and bond strength increases. Consequently, the bearing alloy layer 12 does not easily peel from the back metal layer 11. Furthermore, since the average diameter (B) of the particles of the intermetallic compound 14 decreases, strength of the bearing alloy layer 12 itself increases as a whole. Therefore, not only the strength of the bearing alloy layer 12 can increase, but also the wear resistance can improve. Furthermore, the generation of the cracks in the bearing alloy layer 12 can reduce, and the bond strength between the back metal layer 11 and the bearing alloy layer 12 can also increase.

According to the sliding member 10 of the present embodiment, the average diameter (B) of the particles of the intermetallic compound 14 on the sliding surface 13 side is 80 $\mu$m or more. Thus, the average diameter (B) of the particles of the intermetallic compound 14 on the sliding surface 13 side is 80 $\mu$m or more, so that the intermetallic compound 14 has sufficiently large particle diameters. As a result, it becomes easy for the intermetallic compound 14 to inhibit the proceeding of the wear in the bearing alloy layer 12. Therefore, the wear resistance can securely improve.

In the sliding member 10 of the present embodiment, a value of a ratio of the average diameter (B) of the particles of the intermetallic compound 14 on the sliding surface 13 side to the average diameter (A) of the particles on the back metal layer 11 side is set as follows. That is, a value of the ratio (B/A) is set to B/A $\geq$ 1.3. Furthermore, the value of the ratio (B/A) is set to B/A $\geq$ 1.5, so that further improvement of the wear resistance of the bearing alloy layer 12 is compatible with decrease of the cracks. That is, a sufficient difference is made between the average diameter (A) of the particles of the intermetallic compound 14 on the side close to the back metal layer 11 and the average diameter (B) on the side close to the sliding surface 13, so that the improvement of the wear resistance by the large particles of the intermetallic compound 14 is securely compatible with the increase of the bond strength by the small particles of the intermetallic compound 14.

Next, a production method for the sliding member 10 according to the present embodiment will be described.

The sliding member 10 is produced by centrifugal casting. Specifically, such a cylindrical tube member as shown in Figure 2 is prepared as the back metal layer 11. Furthermore, a molten alloy that forms the bearing alloy layer 12 is supplied to an inner circumferential side of the back metal layer 11 being rotated. The alloy supplied to the back metal layer 11 is cooled, to form the bearing alloy layer 12 on the inner circumferential side of the back metal layer 11. Here, cooled is an outer circumferential surface of the back metal layer 11 opposite to a surface of the back metal layer on which the bearing alloy layer 12 is cast. The cooling of the outer circumferential surface of the back metal layer 11 changes, for example, in accordance with a type or supply amount of a liquid to be sprayed. The cooling of the back metal layer 11 is adjusted, so that a cooling rate of the bearing alloy layer 12 to be cast on the inner circumferential side of the back metal layer 11 changes. The cooling rate of the bearing alloy layer 12 to be cast in this manner is changed, to control the average diameter (A) and the average diameter (B) of the particles of the intermetallic compound 14 included in the bearing alloy layer 12. That is, if the cooling rate is increased, the intermetallic compound 14 having the small average diameter (A) is generated, and if the cooling rate is decreased, the intermetallic compound 14 having the large average diameter (B) is generated. Consequently, the intermetallic compound 14 included in the bearing alloy layer 12 is controlled into the small average diameter (A) on the side close to the back metal layer 11, and into the large average diameter (B) on the side close to the sliding surface 13. In the case where the value of the ratio (B/A) is to be increased, it is desirable to use water as the liquid to be sprayed, and to increase the amount of the liquid to be supplied per unit time. As an example, in the case of the present embodiment, in the sliding member 10, the bearing alloy layer 12 is made of an Sn alloy, and the back metal layer 11 is made of low carbon steel. Furthermore, the sliding member 10 is set to an outer diameter of 600 mm, and a length of 200 mm in an axial direction, and a thickness of the back metal layer 11 is set to 12 mm. In this case, an amount of water to be supplied during the cooling is from 2400 to 2800 L/min, and cooling time is 13 seconds.

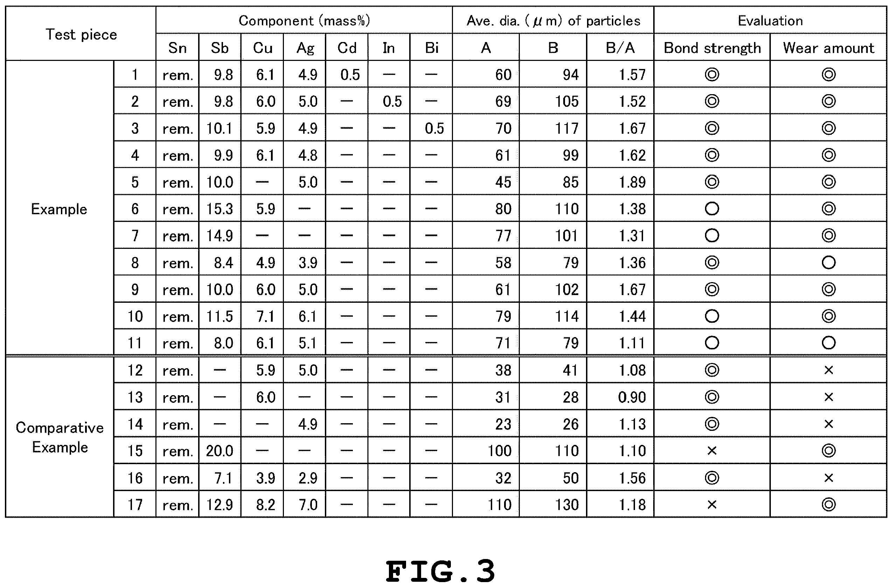

Hereinafter, examples of the sliding member 10 of the present embodiment will be described with reference to Figure 3.

In the examples, evaluated are effects, on a performance of the sliding member 10, of the average diameter (A) and the average diameter (B) of the particles of the intermetallic compound 14 included in the bearing alloy layer 12. Specifically, the evaluation of the sliding member 10 is based on a wear amount of the sliding member 10, and the bond strength between the back metal layer 11 and the bearing alloy layer 12. In the evaluation of the wear resistance, a flat plate-like test piece having a thickness of 2 mm was cut out from the sliding member 10 produced in the above production method, and a reciprocating sliding test was carried out to this test piece. Conditions of the reciprocating sliding test were set to a reciprocating sliding distance of 20 mm, a sliding speed of 1.0 mm/s, a number of reciprocating times of 50 times, and a load of 10 N. In the evaluation of the bond strength, Chalmers test piece was prepared so that a thickness of the bearing alloy layer 12 was 3 mm and a thickness of the back metal layer 11 was 12 mm, from the sliding member 10 produced by the above production method, in accordance with ISO4386. Then, a bond strength test was performed to this test piece. A condition of the bond strength test was set to 10 MPa/s. Then, a wear amount and bond strength of the test piece were evaluated. If the wear amount of the sliding member 10 is 4 $\mu$m or less, the test piece is evaluated as pass, as shown by "a double circle". If the amount is larger than 4 $\mu$m and 6 $\mu$m or less, the piece is evaluated as good, as shown by "a circle". If the amount is larger than 6 $\mu$m, the piece is evaluated as non-applicable to the present embodiment and failure, as shown by "×". Furthermore, if the bond strength of the sliding member 10 is 80 MPa or more, the test piece is evaluated as excellent, as shown by "a double circle". If the strength is 70 MPa or more and less than 80 MPa, the piece is evaluated as pass, as shown by "a circle". If the strength is less than 70 MPa, the piece is evaluated as non-applicable to the present embodiment and failure, as shown by "×".

As shown in Figure 3, in each of "Test Piece 1" to "Test Piece 11" corresponding to the examples, the average diameter (B) of the particles of the intermetallic compound 14 on the side close to the sliding surface 13 is larger than the average diameter (A) of the particles of the intermetallic compound 14 on the side close to the back metal layer 11. Therefore, each of the "Test Piece 1" to "Test Piece 11" has a small wear amount and a high bond strength. On the other hand, in "Test Piece 13" corresponding to a comparative example, the average diameter (B) is smaller than the average diameter (A). Therefore, in "Test Piece 13", the wear amount increases.

In "Test Piece 1" to "Test Piece 7", "Test Piece 9" and "Test Piece 10" corresponding to the examples, the average diameter (B) of the particles of the intermetallic compound 14 on the side close to the sliding surface 13 is larger than 80 $\mu$m. Consequently, each of "Test Piece 1" to "Test Piece 7", "Test Piece 9" and "Test Piece 10" has a small wear amount. On the other hand, in each of "Test Piece 12" to "Test Piece 14" and "Test Piece 16" corresponding to comparative examples, the average diameter (B) is smaller than 80 $\mu$m. Furthermore, in "Test Piece 8" and "Test Piece 11" corresponding to the examples, if the average diameter (B) is 79 $\mu$m, this value is close to 80 $\mu$m, and hence these examples have a slightly lower wear resistance than the other test pieces corresponding to the examples. Consequently, it is seen that, when the average diameter (B) of the particles of the intermetallic compound 14 included in the bearing alloy layer 12 on the side close to the sliding surface 13 is set to be larger than 80 $\mu$m, the setting noticeably contributes to reduction of wear on the bearing alloy layer 12.

In each of "Test Piece 1" to "Test Piece 10" corresponding to the examples, the ratio (B/A) of the average diameter (B) to the average diameter (A) of the intermetallic compound 14 is 1.3 or more. Consequently, in each of "Test Piece 1" to "Test Piece 10", the bond strength between the back metal layer 11 and the bearing alloy layer 12 is sufficiently acquired. Especially, in each of "Test Piece 1" to "Test Piece 5" and "Test Piece 9", the ratio (B/A) is 1.5 or more. Consequently, these "Test Piece 1" to "Test Piece 5" and "Test Piece 9" have excellent wear resistance, and in each of the test pieces, the bond strength between the back metal layer 11 and the bearing alloy layer 12 further increases. In "Comparative Example 16", a ratio (B/A) is larger than 1.5, but an average diameter (B) is as small as 50 $\mu$m. Consequently, in "Comparative Example 16", the bond strength is acquired, but the wear resistance is low. It is seen from the above that the value of the ratio (B/A) of the average diameter (B) to the average diameter (A) of the intermetallic compound 14 has an effect on the bond strength between the back metal layer 11 and the bearing alloy layer 12, and that if this ratio is set to 1.3 or more, not only the wear resistance but also the bond strength improve. Furthermore, it is seen that if the value of the ratio (B/A) is set to 1.5 or more, the wear resistance and the bond strength further improve.

In addition, "Test Piece 12" to "Test Piece 14" corresponding to the comparative examples do not include Sb as an additional element in the bearing alloy layer 12. Consequently, in these "Test Piece 12" to "Test Piece 14", it is difficult to control particle diameters of the intermetallic compound 14, and the average diameter (B) and the value of the ratio (B/A) are not included in a desired range. As a result, it is seen that the wear on the bearing alloy layer 12 proceeds. Furthermore, in "Comparative Example 15", the average diameter (B) is larger than 80 $\mu$m, but the value of the ratio (B/A) is smaller than 1.3, and the bond strength is small. Thus, it is considered as a cause in "Comparative Example 15" that an amount of Sb to be added to the bearing alloy layer 12 is as excessive as 20 mass%. That is, it is considered that in "Comparative Example 15" including the excessive amount of Sb, the average diameter (A) and the average diameter (B) of the particles of the intermetallic compound 14 easily increase, and the bond strength between the back metal layer 11 and the bearing alloy layer 12 is affected. Similarly, in "Comparative Example 17", the average diameter (B) of the particles of the intermetallic compound 14 is larger than 80 $\mu$m, and the wear

resistance is high, but the value of the ratio (B/A) is smaller than 1.3, and the bond strength is small. Consequently, it is also seen that the value of the ratio (B/A) of the average diameter (B) to the average diameter (A) of the particles of the intermetallic compound 14 has an effect on the bond strength between the back metal layer 11 and the bearing alloy layer 12.

The present invention described above is not limited to the above embodiment, and is applicable to various embodiments without departing from the scope of the invention defined by the appended claims.

**Claims**

1. A sliding member comprising:

   a back metal layer,
   a bearing alloy layer that is layered upon the back metal layer, and forms a sliding surface on a side opposite to the back metal layer, and
   an intermetallic compound that is included in a structure of the bearing alloy layer and is harder than an average hardness in the whole bearing alloy layer, **characterised in that**
   in the bearing alloy layer, an average diameter of particles of the intermetallic compound on a side close to the sliding surface is larger than an average diameter on a side close to the back metal layer.

2. The sliding member according to claim 1, wherein in the intermetallic compound, the average diameter of the particles on a side of the sliding surface is 80 $\mu$m or more.

3. The sliding member according to claim 2, wherein a value of a ratio (B/A) of an average diameter (B) of the particles on the sliding surface side to an average diameter (A) of the particles on a side of the back metal layer is:

$$B/A \geq 1.3.$$

4. The sliding member according to claim 3, wherein the value of the ratio (B/A) is:

$$B/A \geq 1.5.$$

5. The sliding member according to any one of claims 1 to 4, wherein the bearing alloy layer is made of an Sn-based alloy containing Sn as a main component.

6. The sliding member according to claim 5, wherein the intermetallic compound is an Sn-Sb alloy.

7. The sliding member according to any one of claims 1 to 6, wherein the back metal layer is made of steel.

8. A production method for the sliding member according to any one of claims 1 to 7, comprising:
   cooling one surface side of the back metal layer having an annular shape, while forming the bearing alloy layer by centrifugal casting, on the other surface side of the back metal layer, and controlling particle diameters of the intermetallic compound included in the bearing alloy layer.

**Patentansprüche**

1. Gleitlagerelement, aufweisend:

   eine rückwärtige Metallschicht,
   eine Lagerlegierungsschicht, welche auf die rückwärtige Metallschicht geschichtet ist und eine Gleitfläche auf einer Seite gegenüber der rückwärtigen Metallschicht bildet, und
   eine intermetallische Verbindung, welche in einer Struktur der Lagerlegierungsschicht enthalten ist und härter ist als eine mittlere Härte in der gesamten Lagerlegierungsschicht,
   **dadurch gekennzeichnet, dass**
   in der Lagerlegierungsschicht ein mittlerer Durchmesser der Partikel der intermetallischen Verbindung auf einer Seite in der Nähe der Gleitfläche größer ist als ein mittlerer Durchmesser auf einer Seite in der Nähe der rückwärtigen Metallschicht.

2. Gleitlagerelement nach Anspruch 1, wobei in der intermetallischen Verbindung der mittlere Durchmesser der Partikel auf einer Seite der Gleitfläche 80 $\mu$m oder mehr beträgt.

3. Gleitlagerelement nach Anspruch 2, wobei ein Wert eines Verhältnisses (B/A) eines mittleren Durchmessers (B) der Partikel auf der Gleitflächenseite zu einem mittleren Durchmesser (A) der Partikel auf einer Seite der rückwärtigen Metallschicht Folgendes beträgt:

$$B/A \geq 1{,}3.$$

4. Gleitlagerelement nach Anspruch 3, wobei der Wert des Verhältnisses (B/A) Folgendes beträgt:

$$B/A \geq 1{,}5.$$

5. Gleitlagerelement nach einem der Ansprüche 1 bis 4, wobei die Lagerlegierungsschicht aus einer Legierung auf Sn-Basis hergestellt ist, welche Sn als eine Hauptkomponente enthält.

**6.** Gleitlagerelement nach Anspruch 5, wobei die intermetallische Verbindung eine Sn-Sb-Legierung ist.

**7.** Gleitlagerelement nach einem der Ansprüche 1 bis 6, wobei die rückwärtige Metallschicht aus Stahl hergestellt ist.

**8.** Herstellungsverfahren für das Gleitlagerelement nach einem der Ansprüche 1 bis 7, umfassend: Kühlen einer Oberflächenseite der rückwärtigen Metallschicht, welche eine Ringform aufweist, während die Lagerlegierungsschicht durch Schleudergießen auf der anderen Oberflächenseite der rückwärtigen Metallschicht gebildet wird, und Steuern von Partikeldurchmessern der intermetallischen Verbindung, die in der Lagerlegierungsschicht enthalten ist.

**Revendications**

**1.** Élément glissant, comprenant :

une couche métallique arrière,
une couche d'alliage porteuse qui est plaquée sur la couche métallique arrière, et forme une surface glissante sur une face opposée à la couche métallique arrière, et
un composé intermétallique qui est inclus dans une structure de la couche d'alliage porteuse et est plus dur qu'une dureté moyenne dans l'ensemble de la couche d'alliage porteuse, **caractérisé en ce que**,
dans la couche d'alliage porteuse, un diamètre moyen de particules du composé intermétallique sur une face proche de la surface glissante est supérieur à un diamètre moyen sur une face proche de la couche métallique arrière.

**2.** Élément glissant selon la revendication 1, dans lequel, dans le composé intermétallique, le diamètre moyen des particules sur une face de la surface glissante est de 80 $\mu$m ou plus.

**3.** Élément glissant selon la revendication 2, dans lequel une valeur d'un rapport (B/A) d'un diamètre moyen (B) des particules sur la face de la surface glissante à l'un diamètre moyen (A) des particules sur une face de la couche métallique arrière est :

$$B/A \geq 1,3.$$

**4.** Élément glissant selon la revendication 3, dans lequel la valeur du rapport (B/A) est :

$$B/A \geq 1,5.$$

**5.** Élément glissant selon l'une quelconque des revendications 1 à 4, dans lequel la couche d'alliage est composée d'un alliage à base de Sn contenant du Sn comme alliage principal.

**6.** Élément glissant selon la revendication 5, dans lequel le composé intermétallique est un alliage de Sn-Sb.

**7.** Élément glissant selon l'une quelconque des revendications 1 à 6, dans lequel la couche métallique arrière est composée d'acier.

**8.** Procédé de production pour l'élément glissant selon l'une quelconque des revendications 1 à 7, comprenant :
le refroidissement d'une face superficielle de la couche métallique arrière ayant une forme annulaire, tout en formant la couche d'alliage porteuse par coulée centrifuge sur l'autre face superficielle de la couche métallique arrière, et le contrôle des diamètres de particules du composé intermétallique inclus dans la couche d'alliage porteuse.

**FIG.1**

**FIG.2**

| Test piece | | Component (mass%) | | | | | | | Ave. dia. ($\mu$m) of particles | | | Evaluation | |
|---|---|---|---|---|---|---|---|---|---|---|---|---|---|
| | | Sn | Sb | Cu | Ag | Cd | In | Bi | A | B | B/A | Bond strength | Wear amount |
| Example | 1 | rem. | 9.8 | 6.1 | 4.9 | 0.5 | — | — | 60 | 94 | 1.57 | ◎ | ◎ |
| | 2 | rem. | 9.8 | 6.0 | 5.0 | — | 0.5 | — | 69 | 105 | 1.52 | ◎ | ◎ |
| | 3 | rem. | 10.1 | 5.9 | 4.9 | — | — | 0.5 | 70 | 117 | 1.67 | ◎ | ◎ |
| | 4 | rem. | 9.9 | 6.1 | 4.8 | — | — | — | 61 | 99 | 1.62 | ◎ | ◎ |
| | 5 | rem. | 10.0 | — | 5.0 | — | — | — | 45 | 85 | 1.89 | ◎ | ◎ |
| | 6 | rem. | 15.3 | 5.9 | — | — | — | — | 80 | 110 | 1.38 | ○ | ◎ |
| | 7 | rem. | 14.9 | — | — | — | — | — | 77 | 101 | 1.31 | ○ | ◎ |
| | 8 | rem. | 8.4 | 4.9 | 3.9 | — | — | — | 58 | 79 | 1.36 | ◎ | ○ |
| | 9 | rem. | 10.0 | 6.0 | 5.0 | — | — | — | 61 | 102 | 1.67 | ◎ | ◎ |
| | 10 | rem. | 11.5 | 7.1 | 6.1 | — | — | — | 79 | 114 | 1.44 | ○ | ◎ |
| | 11 | rem. | 8.0 | 6.1 | 5.1 | — | — | — | 71 | 79 | 1.11 | ○ | ○ |
| Comparative Example | 12 | rem. | — | 5.9 | 5.0 | — | — | — | 38 | 41 | 1.08 | ◎ | × |
| | 13 | rem. | — | 6.0 | — | — | — | — | 31 | 28 | 0.90 | ◎ | × |
| | 14 | rem. | — | — | 4.9 | — | — | — | 23 | 26 | 1.13 | ◎ | × |
| | 15 | rem. | 20.0 | — | — | — | — | — | 100 | 110 | 1.10 | × | ◎ |
| | 16 | rem. | 7.1 | 3.9 | 2.9 | — | — | — | 32 | 50 | 1.56 | ◎ | × |
| | 17 | rem. | 12.9 | 8.2 | 7.0 | — | — | — | 110 | 130 | 1.18 | × | ◎ |

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05239696 A
- WO 2011513592 A
- WO 2016520715 A